# EUROPEAN PATENT SPECIFICATION

(11) **EP 4 419 338 B1**
(45) Date of publication and mention of the grant of the patent: **20.08.2025**
(21) Application number: 21819621.0
(22) Date of filing: 19.10.2021
(51) Int. Cl.: B60C 1/00, C08K 3/04, C08K 5/00

(54) **REDUCED GRAPHENE OXIDE TIN FUNCTIONALIZED ELASTOMER COMPOSITION**
MIT REDUZIERTEM GRAPHENOXIDZINN FUNKTIONALISIERTE ELASTOMERZUSAMMENSETZUNG
COMPOSITION D'ÉLASTOMÈRE À FONCTION ÉTAIN À TENEUR RÉDUITE EN OXYDE DE GRAPHÈNE

(43) Date of publication of application: 28.08.2024
(73) Proprietor: COMPAGNIE GENERALE DES ETABLISSEMENTS MICHELIN, 63000 Clermont-Ferrand (FR)
(72) Inventor: KHRIPIN, Constantine, Greenville, South Carolina 29605 (US); VAUTARD, Frederic, Greenville, South Carolina 29605 (US)
(74) Representative: Casalonga
(86) International application number: PCT/US2021/055517
(87) International publication number: WO 2023/069073

(56) References cited:
- WO-A1-2020/152697
- US-A1- 2019 270 863
- US-A1- 2021 061 962

## Description

### FIELD OF THE INVENTION

The subject matter of the present invention relates to improved rubber compositions and particularly to reduced graphene oxide (RGO) tin functionalized elastomer compositions with improved properties.

### BACKGROUND OF THE INVENTION

It has long been shown that fillers improve the properties of rubber elastomers, improving wear resistance, increasing rigidity, increasing thermal conductivity and tear resistance. Formulations of rubber compositions are created by combing different proportions of elastomers, fillers and other components to create rubber compositions having specific properties and performance characteristics. These properties and characteristics can be varied by changing the composition ratios resulting in improved properties or performances in some or many aspects and a decrease in properties or performance in another aspect resulting in a compromise as the composition is changed as the formulator optimizes the composition for a particular purpose (wear resistance for the tread of a tire, or low hysteresis for a non-pneumatic tire spoke, shearband or sidewall rubber of a tire). These compromises are sometimes broken and all-around performance characteristics are achieved when the components of new compositions are found to work synergistically to unexpectedly improve all or many of the properties or characteristics of the rubber.

Different fillers lend positive and negative traits to elastomer formulations and new filler-elastomer discoveries represent breakthroughs in standard performance characteristics of elastomers resulting in a break from the standard compromises. Among the innovative fillers Reduced Graphene Oxides (herein "RGO") have shown very interesting properties regarding the rigidity/energy dissipation compromise, surpassing conventional fillers like carbon black and silica. Indeed, high levels of rigidity were obtained at low concentration (4-5 wt.% in a styrene-butadiene rubber mix to obtain a rigidity equivalent to a mix made with 32 wt.% of N234) and low levels of energy dissipation were obtained.

While many properties of RGO elastomers are encouraging, wear studies indicate that the resistance to wear of RGO elastomers to be poor. This represents disappointing results discouraging the use of RGO in tread-rubber formulation. A need exists for improvement to wear resistance. A RGO formulation that improves the elastomer's rigidity vs. energy dissipation compromise and reduce the rolling resistance of the tire would be particularly useful.

### SUMMARY OF THE INVENTION

Aspects and advantages of the invention will be set forth in part in the following description, or may be obvious from the description, or may be learned through practice of the invention.

The invention includes chemically modifying the polymer in which the RGO is to be dispersed by the addition of a molecule with particular affinity for the RGO surface. In one exemplary embodiment, an tin functionalized elastomer is mixed with a reduced graphene oxide filler to produce a rubber composition.

These and other features, aspects and advantages of the present invention will become better understood with reference to the following description and appended claims. The accompanying drawings, which are incorporated in and constitute a part of this specification, illustrate properties of embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 show SEM characterization of N002-PDR (top) and N002-PDE (bottom) in free powder form.
FIG. 2 show STEM pictures of N002-PDR (left) and N002-PDE (right) particles.
FIG. 3 shows high resolution C1s peaks, N002-PDE.
FIG. 4 shows an Xray Photoemission Spectroscopy ("XPS") graph, which shows high resolution O1s peaks, N002-PDE.
FIG. 5 is an Xray Photoemission Spectroscopy ("XPS") graph, which shows the Rubber Process Analyzer ("RPA") curves of non-functionalized styrene-butadiene rubber and RGO mix (blue curves) and a tin-functionalized styrene-butadiene rubber and RGO mix (red curves).
FIG. 6 shows the true secant modulus ("MSV") curves of PDR RGO mixed with non-functionalized styrene butadiene rubber (blue curves) and functionalized styrene-butadiene rubber (red curves).
FIG. 7 shows MSV curves of PDE RGO mixed with non-functionalized styrene butadiene rubber (blue curves) and functionalized styrene-butadiene rubber (red curves).
FIG. 8 shows the Dynamic Mechanical Analysis ("DMA"), G* (MPa) strain sweep at 23°C, for non-functionalized styrene butadiene rubber (blue curves) and functionalized styrene-butadiene rubber (red curves).
FIG. 9 shows the DMA, Tan delta strain sweep at 23°C, for non-functionalized styrene butadiene rubber (blue curves) and functionalized styrene-butadiene rubber (red curves).
FIG. 10 shows the DMA, shear modulus G* temperature sweep at stress = 0.7 MPa, for non-functionalized styrene butadiene rubber (blue curves) and functionalized styrene-butadiene rubber (red curves).
FIG. 11 shows the DMA, tan dela temperature sweep at stress = 0.7 MPa, for non-functionalized styrene butadiene rubber (blue curves) and functionalized styrene-butadiene rubber (red curves).
FIG. 12 shows the DMA, shear modulus G* temperature sweep at stress = 0.7 MPa, for non-functionalized styrene butadiene rubber (blue curves) and functionalized styrene-butadiene rubber (red curves).
FIG. 13 shows the RPA curves for nonfunctionalized polybutadiene rubber, KBR710H (blue) and functionalized polybutadiene rubber, BR1250H (red) with N002-PDR and N002-PDE
FIG. 14 shows the MSV curves for nonfunctionalized polybutadiene rubber, KBR710H (blue) and functionalized polybutadiene rubber, BR1250H (red) with N002-PDR and N002-PDE.
FIG. 15 shows the MSV curves for nonfunctionalized polybutadiene rubber, KBR710H (blue) and functionalized polybutadiene rubber, BR1250H (red) with N002-PDR and N002-PDE.
FIG. 16 shows the DMA, shear modulus G* strain sweep at 23°C, N002-PDR and N002-PDE in nonfunctionalized polybutadiene rubber, KBR710H (blue) and functionalized polybutadiene rubber, BR1250H (red).
FIG. 17 shows the DMA, tan delta strain sweep at 23°C, N002-PDR and N002-PDE in nonfunctionalized polybutadiene rubber, KBR710H (blue) and functionalized polybutadiene rubber, BR1250H (red).
FIG. 18 shows the DMA, shear modulus G* temperature sweep, N002-PDR and N002-PDE in nonfunctionalized polybutadiene rubber, KBR710H (blue) and functionalized polybutadiene rubber, BR1250H (red).
FIG. 19 shows the DMA, tan delta temperature sweep, N002-PDR and N002-PDE in nonfunctionalized polybutadiene rubber, KBR710H (blue) and functionalized polybutadiene rubber, BR1250H (red).

### DETAILED DESCRIPTION OF THE INVENTION

The present invention provides a reduced graphene oxide containing rubber composition having an improved rigidity versus energy dissipation compromise while improving wear resistance. This rubber formulation may find particular use for articles including tires and particularly for the tread rubber of tires.

For purposes of describing the invention, reference now will be made in detail to embodiments and/or methods of the invention, one or more examples of which are illustrated in or with the drawings. Each example is provided by way of explanation of the invention, not limitation of the invention.

In the examples that follow, various material properties are described. These properties were obtained using tests as ordinarily used to quantify such properties and are described as follows:

"Mn" is the number average molecular weight. This is the total weight of all polymer molecules contained in a sample divided by the total number of polymer molecules of the sample. It is an arithmetic average - all chains are equally important when calculating this parameter.

"Mw" is the weight average molecular weight. This is based on the fact that a bigger molecule contains more of the total weight of the polymer sample than smaller molecules. This parameter is highly susceptible to chains of high molecular weight.

"IP" is the polydispersity of an elastomer. This measures the amplitude of the Molecular Weights Distribution curve (MWD) and represents the ratio between the average molecular weight (Mw) and the average molecular weight in number (Mn).

A true secant modulus (MSV) of elongation (MPa) was measured at 10% (MA10), 100% (MA100) and 300% (MA300) at temperature of 23°C based on ASTM Standard D412 on ASTM C test pieces.

The elongation property was measured as strain at break (%) and the corresponding stress at break (MPa), which is measured at 23°C in accordance with ASTM Standard D412 on ASTM C test pieces.

The shear modulus G* at 10% strain and the maximum tan delta dynamic properties for the rubber compositions were measured at 23°C on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress at a frequency of 10 Hz under a controlled temperature of 23° C. Scanning was effected at an amplitude of deformation of 0.05 to 50% (outward cycle) and then of 50% to 0.05% (return cycle). The shear modulus G* at 10% strain and the maximum value of the tangent of the loss angle tan delta were determined during the return cycle.

To test fatigue of the elastomer samples, fatigue to fracture or "FTF" testing in accordance with ASTM D4482 - 11(2017) Standard Test Method for Rubber Property was carried out. The extension cycling fatigue temperature was set at 25°C.

To determine the wear performance of rubber, a proprietary abrasion resistance test was conducted where a rubber specimen of known mass was loaded against a simulated road surface to a pressure of 1 bar, then moved under pressure for a distance of 4 m. The mass of the sample was then measured again to determine the amount of rubber lost.

### Tin Functionalized Elastomer Synthesis

The functionalization of a dienic elastomer is well understood in the art and the functionalization of an elastomer with tin and can be obtained commercially. For example PCT Patent Application Publication by Mehlem, WO 2011/123406 A1 and US Patent No. 6084022 Blok et al. both disclose the use of a tin functionalization of an elastomer.

### Characterization of the Two RGO Fillers Used

Two reduced graphene oxide fillers from the Global Graphene Group (G3, Dayton, OH, USA) were used: N002-PDR and N002-PDE.

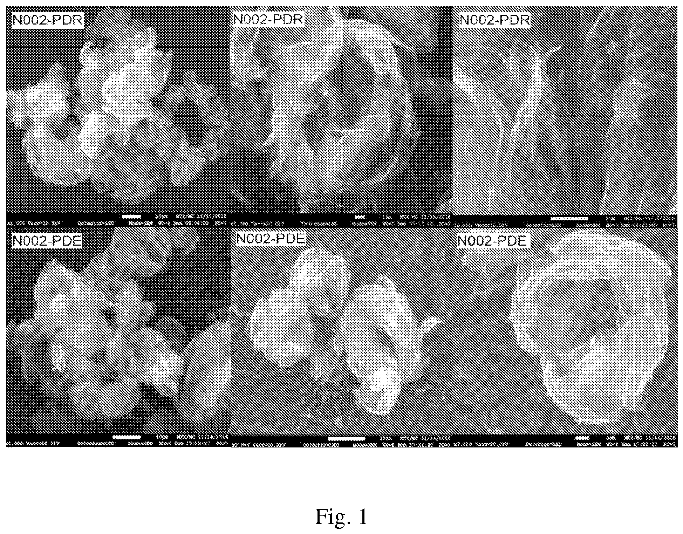

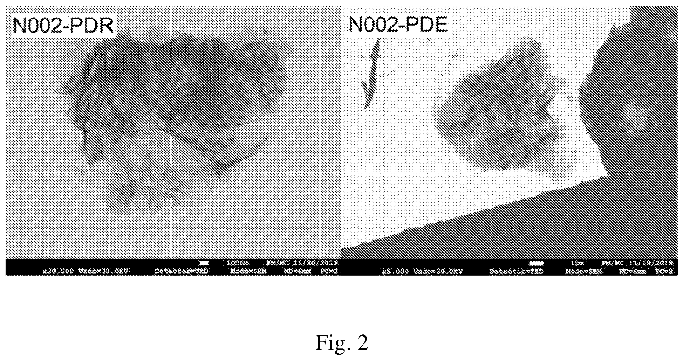

In powder form, aggregates of the RGO sheets have a typical structure as depicted in Figure 1 with bent RGO sheets laying on top of each other. Both RGO fillers used have aggregates with a typical size of 10 microns. Imaging of these aggregates can be performed by sonication of a few wt.% of powder in ethanol or Tetrahydrofuran ("THF") then a few drops of the solution is left on a Transmission Electronic Microcopy ("TEM") grid. Individual RGO particles were observed with a Scanning Electron Microscope ("SEM") in Scanning Transmission Electronic Microscope ("STEM") mode, the images from which are shown in Figure 2. The N002-PDR particles can be seen as having an average diameter of 4-5 microns, slightly lower compared to the N002-PDE particles which averaged 6-7 microns.

Both RGO fillers had a specific surface area that was in the range of 800-850 m²/g as shown in Table 1 herein. The notable difference between the two RGO fillers was the content in oxygen. Typically, the N002-PDE had an oxygen content that was 5-6 at. % whereas the N002-PDR was more reduced, with an oxygen content < 1 at. % as shown by Tables 2 and 3. This was measured by both X-ray Energy Dispersive Spectroscopy ("EDS") and X-ray Photoelectron Spectroscopy ("XPS").

**Table 1: Specific surface area measured by nitrogen adsorption and BET analysis.**

| | **N002-PDR** | **N002-PDE** |
|---|---|---|
| Specific surface area (m²/g) | 830 | 860 |

**Table 2: Elemental composition as measured by X-ray Energy Dispersive Spectroscopy.**

| | **% C** | **% O** | **% S** | **% Na** |
|---|---|---|---|---|
| N002-PDR | 98.2 | 0.9 | 0.7 | 0.2 |
| N002-PDE | 91.7 | 5.9 | 2.1 | 0.3 |

**Table 3: Elemental composition as measured by X-ray Photoelectron spectroscopy.**

| | **% C** | **% O** | **% S** | **% Na** |
|---|---|---|---|---|
| N002-PDR | 99.4 | 0.4 | 0.1 | 0.1 |
| N002-PDE | 94.2 | 5.0 | 0.5 | 0.3 |

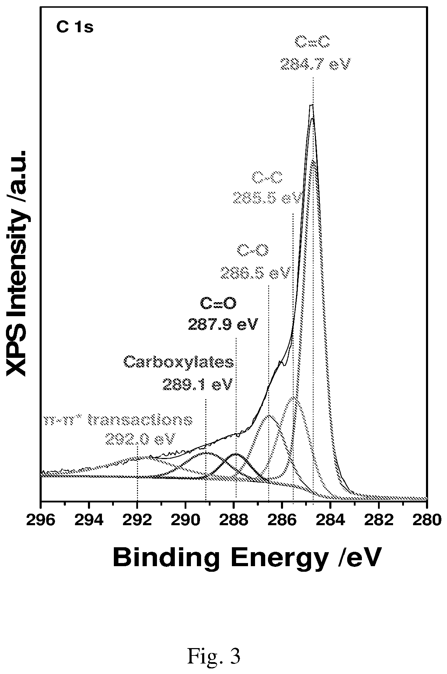

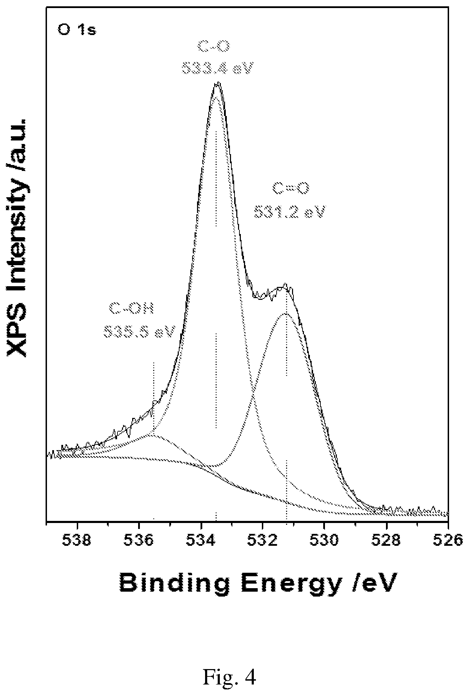

The fitting of the C1s and O1s peaks of Figure 3 show that most of the oxygen was in the form of hydroxyl, epoxide groups and lactones for the N002-PDE reference and in the form of lactones and carboxylic acids for the N002-PDR reference also shown in Tables 4 and 5 herein and depicted in Figures 3 and 4.

**Table 4: Relative surface area corresponding to the C1s peak fitting components.**

| **Peak component % (ratio)** | **Csp2** | **Csp3** | **C-O, C-OR** | **C=O** | **COO-R, COOH** | **π-π*** |
|---|---|---|---|---|---|---|
| **N002-PDE** | 58.0 | 15.3 | 9.3 | 4.8 | 4.8 | 7.8 |
| **N002-PDR** | 60.5 | 13.2 | 8.5 | 3.5 | 4.9 | 9.4 |

**Table 5: Relative surface area corresponding to the O1s peak fitting components.**

| **Peak component % (ratio)** | **C=O** | **C-O-R** |
|---|---|---|
| **N002-PDE** | 30.1 | 69.9 |
| **N002-PDR** | 57.9 | 42.1 |

### Composition of the Rubber Mixes

A tin-functionalized and a non-functionalized version of a styrene butadiene rubber mix and a polybutadiene rubber mix were tested and compared. A standard mixing process was used. Mixing and milling processes were performed using a Bandbury mixer (HAAKE PolyLab OS RheoDrive from ThermoFisher) and Brabender mill.

The rubber formulations were prepared by mixing the components given in Table 7 and 10, except for the sulfur and the accelerator (CBS), in the Banbury mixer. With the mix chamber at 110°C operating at 90 RPM the rubber is added and mixed for 1 minute. The rotation speed is decreased to 30 RPM and the filler is added and mixed for an additional 1 minute. The rotation speed is increased to 90 rpm and mixed for an additional 1 minute. Finally, the anti-degradants ZnO (zinc oxide), 6PPD (N-(1,3-dimethylbutyl)-N'-phenyl-1,4-benzenediamine) as well as a processing aid, SAD (steric acid derivative) are added and mixed for an additional minute. The mixer piston is raised and lowered and mixed for an additional minute. The mix is dropped allowed to cool, then mixed on a 2-roll mill at 50°C. The accelerator and sulfur are added at this point and milled for a total of 12 passes after full incorporation of the accelerator and sulfur.

### Styrene-Butadiene Rubber Mix

It is known that tin coupling can generate the grafting of elastomer chains on the surface of carbon-based fillers. This was demonstrated with carbon black. But the carbon structure and surface chemistry of RGO is very different from carbon black (furnace or acetylene carbon blacks).

The first part of the invention record involved a witness mix (SBR-W) and its tin functionalized equivalent (SBR-F). The microstructure of the two references is similar, only the macrostructure is different (Table 6).

**Table 6: Macro and microstructures of SBR-W and SBR-F.**

| | Microstructure | | | | Tg (°C) | Mn | Mw | IP |
|---|---|---|---|---|---|---|---|---|
| | % sty | % vinyl | % trans | % cis | | | | |
| SBR-W | 27 | 24 | 46 | 30 | -48 | 118,700 | 204,400 | 1.72 |
| SBR-F | 27 | 24 | 49 | 28 | -48 | 147,300 | 261,600 | 1.78 |

Both types of RGO were used and mixes at concentrations of 4 wt.% were made. Their compositions are reported in Table 7.

**Table 7: Composition of SBR-based mixes (in phr) with RGO at 4 wt. %.**

| | SBR-F1 | SBR-F2 | SBR-W1 | SBR-W2 |
|---|---|---|---|---|
| SBR-W | | | 100 | 100 |
| SBR-F | 100 | 100 | | |
| ZnO | 2.0 | 2.0 | 2.0 | 2.0 |
| SAD | 1.2 | 1.2 | 1.2 | 1.2 |
| 6PPD | 2.0 | 2.0 | 2.0 | 2.0 |
| N002-PDR | 4.5 | | 4.5 | |
| N002-PDE | | 4.5 | | 4.5 |
| CBS | 1.5 | 1.5 | 1.5 | 1.5 |

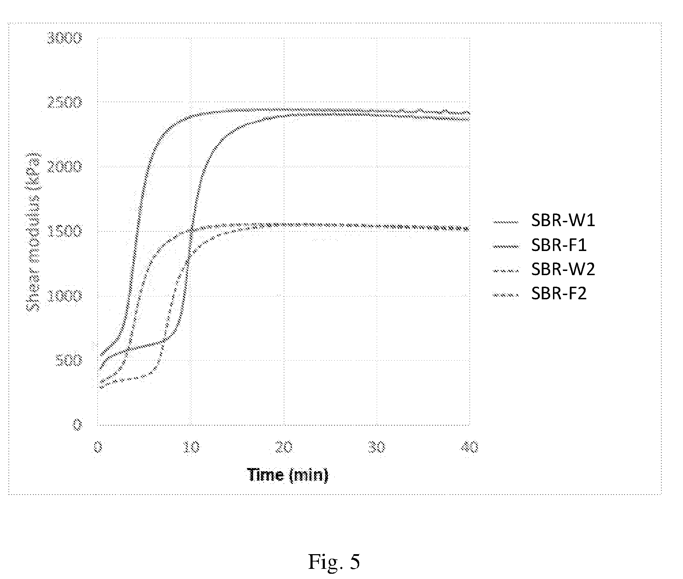

Rheometry showed that the scorch time was sharply reduced with tin coupling (Figure 5). The viscosities were the same between SBRs at iso-filler.

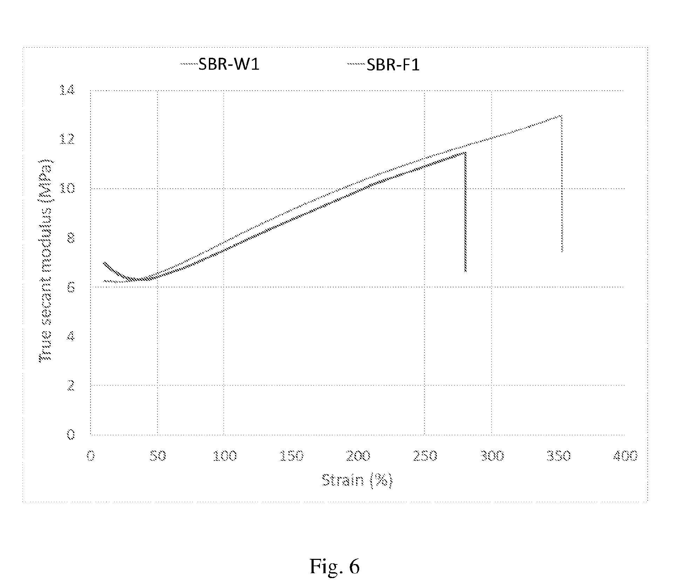

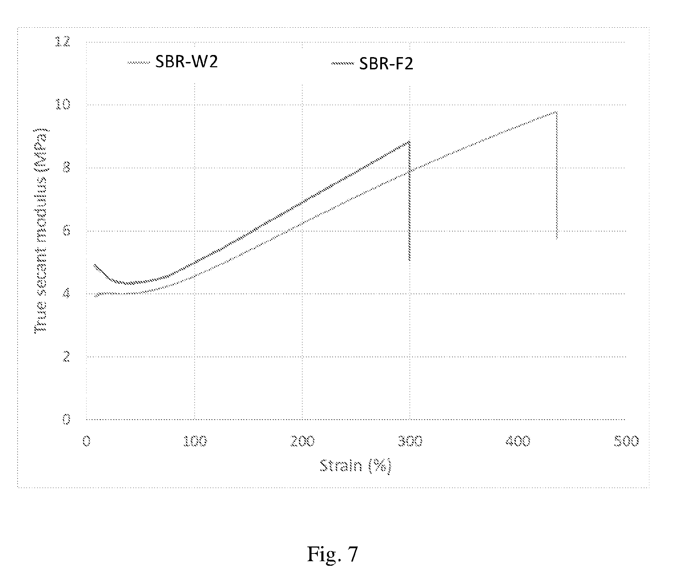

Static tensile properties did not show any improvement that would correspond to the generation of covalent bonding at the interface with N002-PDR (Figure 6 and 7 and Table 8). On the contrary, the coupling effect was strong with the N002-PDE reference (slightly higher rigidity, higher reinforcement). It seems that the oxygen-containing functional groups of its surface helped (and potentially a difference in the aromaticity of the associated carbon structure as well). At iso-volume, N002-PDR led to higher values of rigidity and tensile strength than N002-PDE.

**Table 8: Tensile properties indicators corresponding to Figure 5.**

| | MA 10 (MPa) | MA 100 (MPa) | MA 300 (MPa) | Tensile strength at break (MPa) | Tensile strain at break (%) | MA 300 / MA 100 |
|---|---|---|---|---|---|---|
| SBR-W1 | 6.27 ± 0.09 | 7.86 ± 0.05 | 12.07 ± 0.05 | 10.14 ± 0.81 | 355 ± 40 | 1.54 ± 0.01 |
| SBR-F1 | 7.02 ± 0.09 | 7.58 ± 0.05 | -- | 8.79 ± 0.42 | 279 ± 19 | -- |
| SBR-W2 | 4.09 ± 0.08 | 4.59 ± 0.06 | 7.91 ± 0.06 | 7.95 ± 0.51 | 435 ± 38 | 1.72 ± 0.01 |
| SBR-F2 | 5.29 ± 0.05 | 5.30 ± 0.03 | -- | 7.18 ± 0.54 | 298 ± 25 | -- |

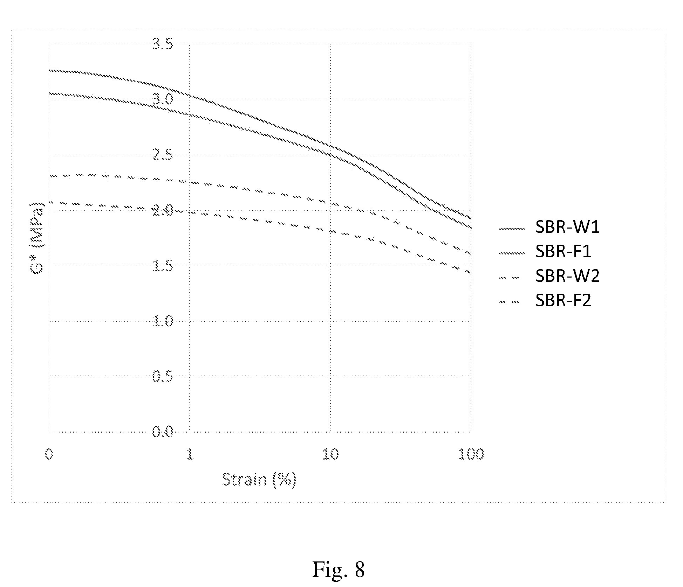

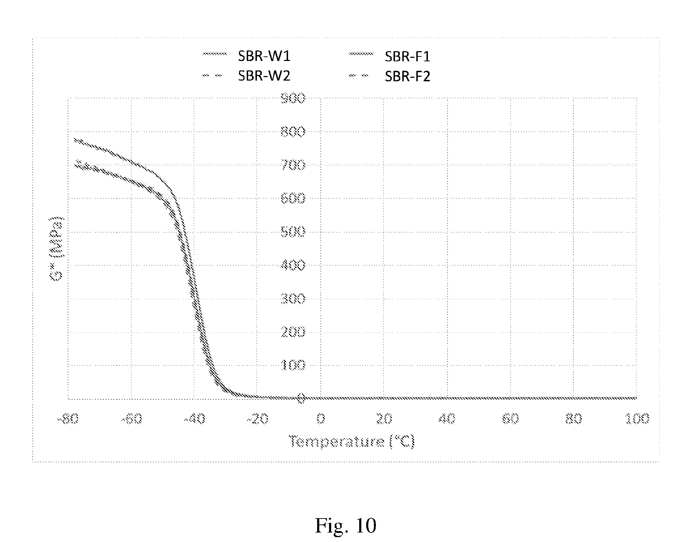

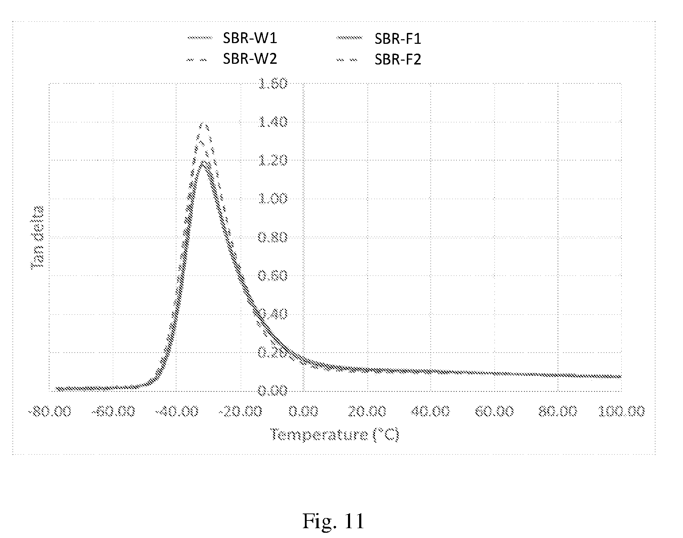

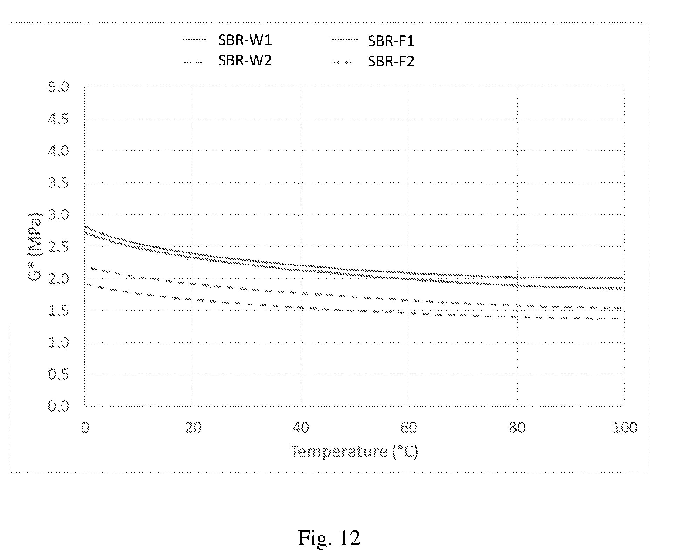

Dynamic properties confirmed that the rigidity of the rubber composite is higher with N002-PDR vs. N002-PDE at iso-volume (Figures 8, 9, 10, 11, and 12., Table 9). Tin coupling had a limited effect with the N002-PDR. The rigidity decreased slightly, including a small decrease of the Payne effect, which was associated to less energy dissipation. A very mild linearization effect may have happened with N002-PDR, but it was not strong enough to modify the tensile properties significantly. With N002-PDE, the rigidity increased, and the energy dissipation decreased at the same time (including a drop of tan delta at no strain). Tin coupling might have led to a combination of a slightly better dispersion (higher rigidity with equivalent Payne effect) and of the generation of covalent bonding at the interface (lower tan delta). The temperature sweep confirmed that all mixes were fully cured (no increase of tan delta with increasing temperature after 40°C).

With these results, we demonstrate that the RGO that contains some oxygen at 5-7 at. % was a better fit for the tin coupling versus the heavily reduced RGO (less than 1 at. % in oxygen). This is not obvious and even counter-intuitive, as carbon blacks typically have around 1 at. % percent in oxygen as well at the most. One could have expected that the N002-PDR would have generated stronger interfacial interactions with the tin-functionalized elastomer.

**Table 6: Dynamic properties indicators corresponding to Figures 8, 9, 10, 11, and 12.**

| | G* 10% (MPa) | Max tan delta | G* 60 °C (MPa) |
|---|---|---|---|
| SBR-W1 | 2.58 | 0.12 | 2.09 |
| SBR-F1 | 2.50 | 0.11 | 1.99 |
| SBR-W2 | 1.81 | 0.11 | 1.46 |
| SBR-F2 | 2.06 | 0.10 | 1.66 |

### Polybutadiene Rubber Mix

The commercial product Nipol BR1250H (herein "BR-F") from Zeon was analyzed internally and was shown to bear tin and amine functionalization, but with a low content in amine functionalities (much lower than the tin concentration). It is also a low-cis BR, so another commercial product had to be found in order to make an analytical comparison between a functionalized and a non-functionalized reference. The product KBR710H (herein "BR-W") from Kuhmo Petrochemicals (35% in cis and 15% in vinyl) was chosen as the non-functionalized polybutadiene. Also, using these polybutadienes without blending them with another type of rubber results in decohesive mixes. Some Natural Rubber (NR) was added to avoid this issue (Table 10).

**Table 7: Composition of the mixes for the tin coupling in polybutadiene study (in grams).**

| | **BR-W1** | **BR-F1** | **BR-W2** | **BR-F2** |
|---|---|---|---|---|
| BR-W | 38.86 | | 38.86 | |
| BR-F | | 38.86 | | 38.86 |
| NR | 7.78 | 7.78 | 7.78 | 7.78 |
| N002-PDR | 2.19 | 2.19 | | |
| N002-PDE | | | 2.19 | 2.19 |
| ZnO | 0.97 | 0.97 | 0.97 | 0.97 |
| SAD | 0.58 | 0.58 | 0.58 | 0.58 |
| 6PPD | 0.97 | 0.97 | 0.97 | 0.97 |
| s | 0.71 | 0.71 | 0.71 | 0.71 |
| CBS | 0.71 | 0.71 | 0.71 | 0.71 |

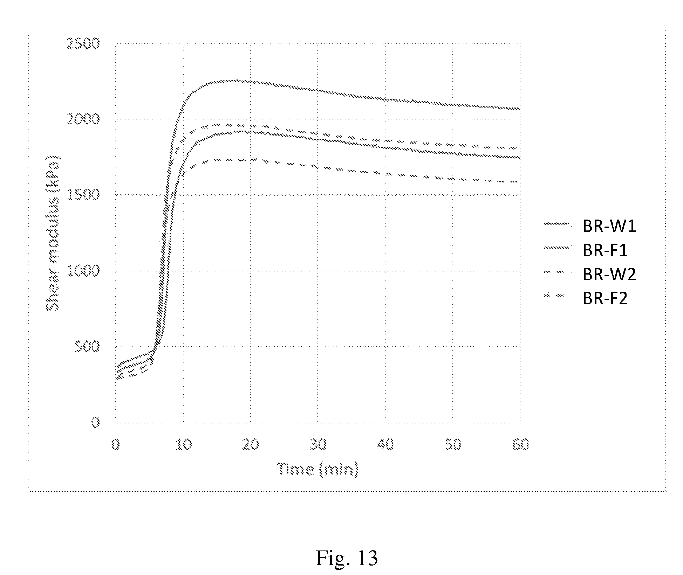

Rheometry showed similar viscosities at the green state for the four samples shown in Figure 13. Similar viscosities to the reference mix at the green state indicates good processability of the green rubber during stages of mixing, calendaring and extruding. Scorch time reduced when using the tin-functionalized polybutadiene rubber in comparison to nonfunctionalized polybutadiene. The shear modulus for the cured state was higher with tin coupling, for both fillers. It seemed that the vulcanization reaction was accelerated in the case of BR1250H (BR-F), likely because of the amine functionalities.

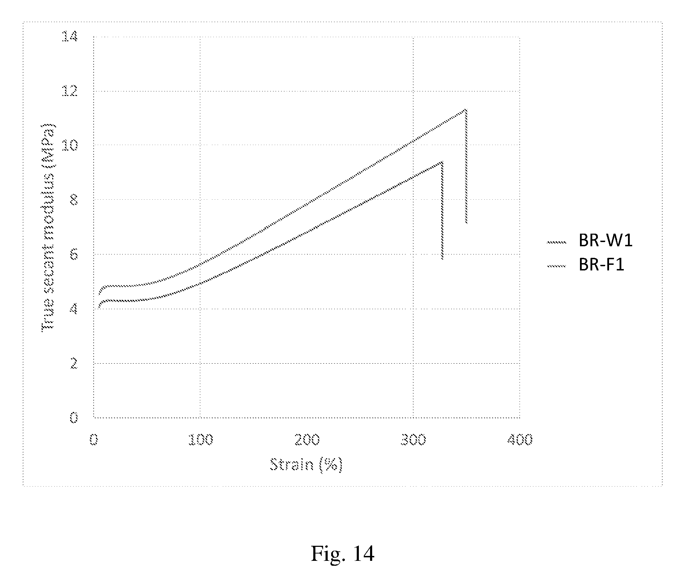

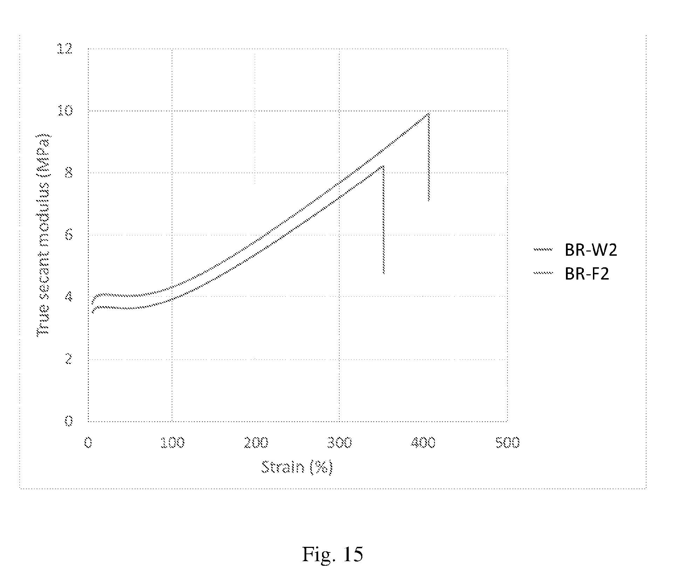

Tensile properties showed a large improvement with tin coupling, with an increase in both rigidity and reinforcement (increase of both strength and strain at break), with both fillers (Figure 14, 15 and Table 11). A vulcanization effect certainly participates in the increase of rigidity. It is difficult at this point to understand why the tin coupling works so well in a BR mix with N002-PDR, when there was no effect in SBR.

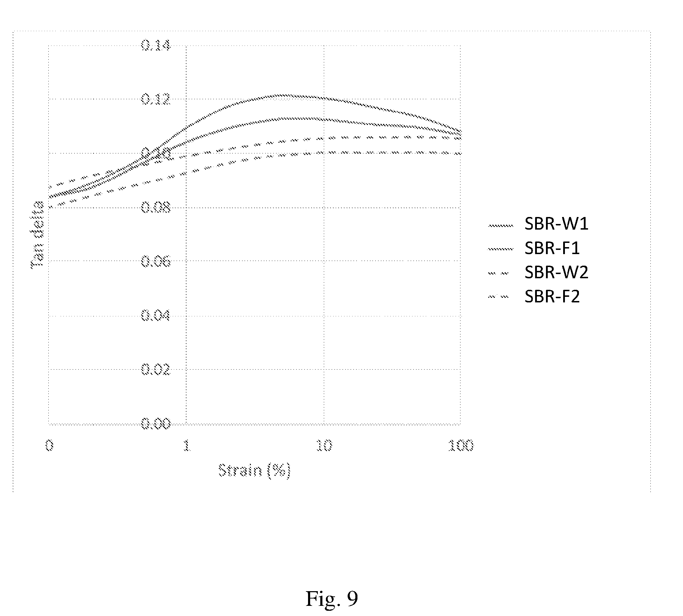

**Table 8: Tensile properties indicators corresponding to Figure 9.**

| | MA 10 (MPa) | MA 100 (MPa) | MA 300 (MPa) | Tensile strength at break (MPa) | Tensile strain at break (%) | MA 300 / MA 100 |
|---|---|---|---|---|---|---|
| BR-W1 | 4.27 ± 0.10 | 4.93 ± 0.04 | 8.83 ± 0.04 | 7.20 ± 0.77 | 326 ±38 | 1.79 ± 0.02 |
| BR-F1 | 4.89 ± 0.09 | 5.68 ± 0.03 | 10.20 0.03 | 8.85 ± 0.51 | 350 ± 21 | 1.80 ± 0.01 |
| BR-W2 | 3.65 ± 0.09 | 3.92 ± 0.03 | 7.19 ± 0.04 | 6.40 ± 0.24 | 352 ± 14 | 1.83 ± 0.02 |
| BR-F2 | 3.97 ± 0.08 | 4.28 ± 0.04 | 7.65 ± 0.03 | 7.92 ± 0.71 | 406 ± 33 | 1.79 ± 0.02 |

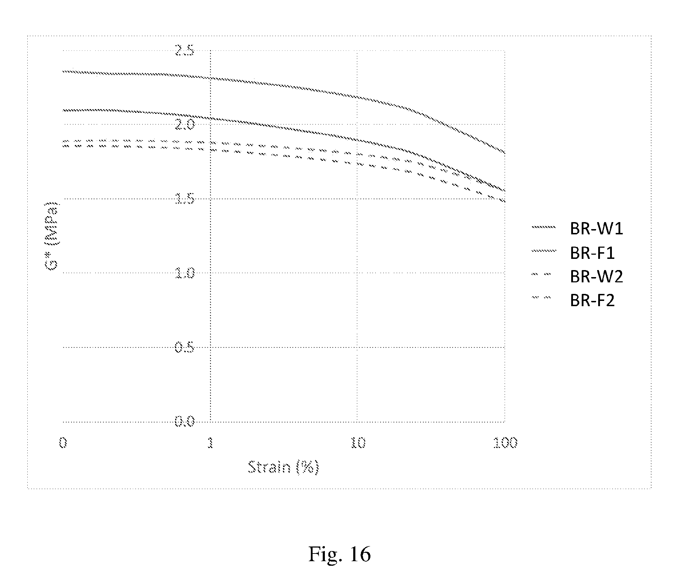

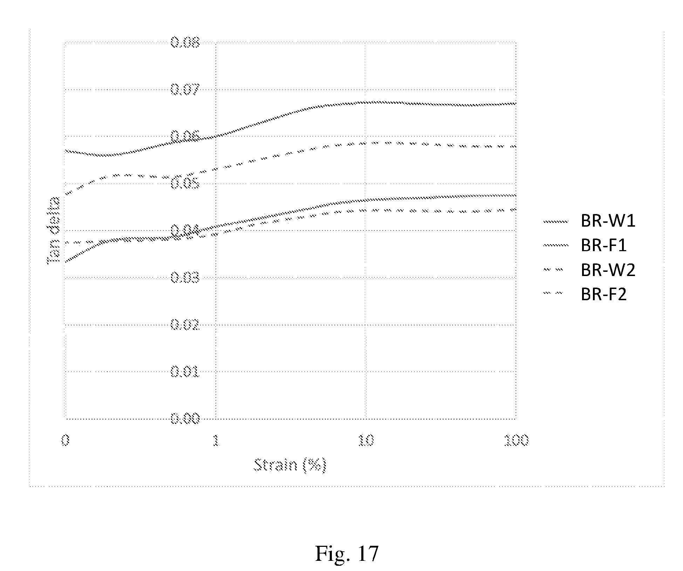

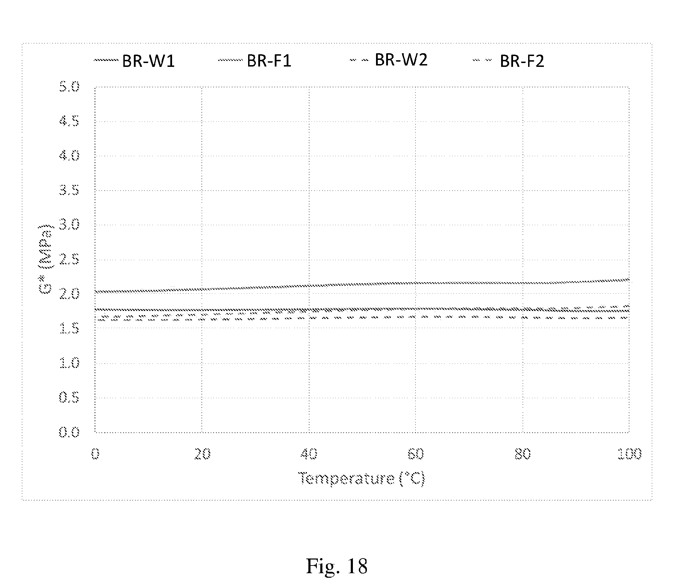

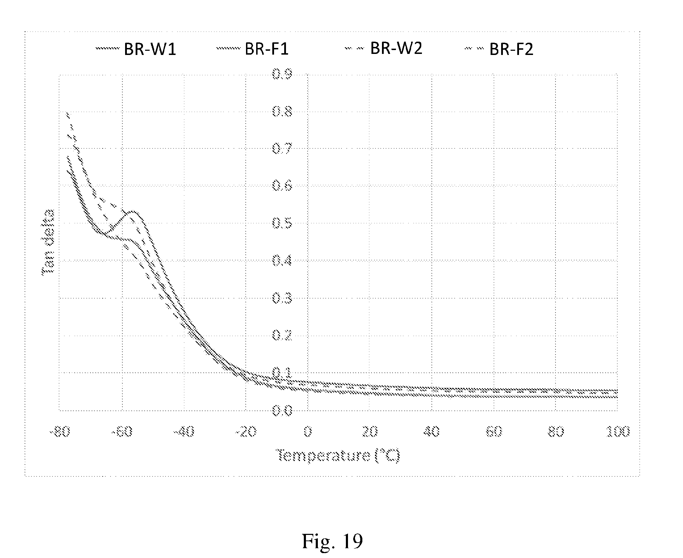

Dynamic properties confirmed an increase in rigidity with tin coupling for both fillers as well as a sharp decrease in energy dissipation (Figures 16, 17, 18, and 19, Table 12), which confirms the generation of covalent bonding at the interface, coupled to a vulcanization effect. The temperature sweep curve displayed a peak at -57°C corresponding to the Tg of the natural rubber, which was at -49°C when not mixed with another elastomer (Figure 9), proving some partial compatibility with the polybutadiene. The compatibility appeared to be higher with BR1250H and that might have been in favor of the better ultimate tensile properties when compared to KBR710H.

**Table 9: Dynamic properties indicators corresponding to Figures 16, 17, 18, and 19.**

| | G* (MPa) | Max tan delta | G* 60°C (MPa) |
|---|---|---|---|
| BR-W1 | 1.89 | 0.07 | 1.78 |
| BR-F1 | 2.18 | 0.05 | 2.16 |
| BR-W2 | 1.74 | 0.06 | 1.67 |
| BR-F2 | 1.80 | 0.04 | 1.79 |

Selected combinations of aspects of the disclosed technology correspond to a plurality of different embodiments of the present invention. It should be noted that each of the exemplary embodiments presented and discussed herein should not insinuate limitations of the present subject matter. Features or steps illustrated or described as part of one embodiment may be used in combination with aspects of another embodiment to yield yet further embodiments. Additionally, certain features may be interchanged with similar devices or features not expressly mentioned which perform the same or similar function.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm." Also, the dimensions and values disclosed herein are not limited to a specified unit of measurement. For example, dimensions expressed in English units are understood to include equivalent dimensions in metric and other units (e.g., a dimension disclosed as "1 inch" is intended to mean an equivalent dimension of "2.5 cm").

As used herein, the term "method" or "process" may include one or more steps performed at least by one electronic or computer-based apparatus. Any sequence of steps is exemplary and is not intended to limit methods described herein to any particular sequence, nor is it intended to preclude adding steps, omitting steps, repeating steps, or performing steps simultaneously. As used herein, the term "method" or "process" may include one or more steps performed at least by one electronic or computer-based apparatus having a processor for executing instructions that carry out the steps.

As used herein, "phr" is "parts per hundred parts of rubber by weight" and is a common measurement in the art wherein components of a rubber composition are measured relative to the total weight of rubber in the composition, *i.e.,* parts by weight of the component per 100 parts by weight of the total rubber(s) in the composition.

As used herein, elastomer and rubber are synonymous terms.

The terms "a," "an," and the singular forms of words shall be taken to include the plural form of the same words, such that the terms mean that one or more of something is provided. The terms "at least one" and "one or more" are used interchangeably. Ranges that are described as being "between a and b" are inclusive of the values for "a" and "b."

The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

## Claims

1. A rubber composition comprising:
a tin functionalized elastomer;
a reduced graphene oxide; and
a crosslinking system.

2. The rubber composition of claim 1 wherein the tin functionalized elastomer is a diene elastomer being selected from the group consisting of polybutadienes, synthetic polyisoprenes, natural rubber, copolymers of butadiene, styrene-butadiene, isoprene copolymers and mixtures of these elastomers.

3. The rubber composition of claim 2 wherein the tin functionalized elastomer is a styrene-butadiene elastomer.

4. The rubber composition of claim 2 wherein the tin functionalized elastomer is a polybutadiene elastomer.

5. The rubber composition of any one of the previous claims wherein the reduced graphene oxide has an oxygen content between 0.1 and 20 mol %.

6. The rubber composition of claim 5 wherein the reduced graphene oxide has an oxygen content between 0.1 and 1.5 mol %.

7. The rubber composition of claim 5 wherein the reduced graphene oxide has an oxygen content between 0.4 and 0.9 mol%.

8. The rubber composition of claim 5 wherein the reduced graphene oxide has an oxygen content between 4 and 20 mol %.

9. The rubber composition of claim 8 wherein the reduced graphene oxide has an oxygen content between 4 and 9 mol %.

10. The rubber composition of claim 8 wherein the reduced graphene oxide has an oxygen content between 4 and 8 mol %.

11. The rubber composition of claim 8 wherein the reduced graphene oxide has an oxygen content of 5 to 5.9 mol %.

12. The rubber composition of any one of the above claims wherein the reduced graphene oxide has a specific surface area of more than 400 m²/g, measured as described in the specification.

13. The rubber composition of claim 12 wherein the reduced graphene oxide has a specific surface area of equal to or more than 600 m²/g.

14. The rubber composition of claim 12 wherein the reduced graphene oxide has a specific surface area of equal to or more than 800 m²/g.

15. The rubber composition of claim 3 wherein the molecular weight (Mn) of the polymer is in the range of 140 to 160 kg/mol.

16. The rubber composition of claim 3 wherein the styrene-butadiene rubber is obtained by solvent polymerization.

17. A tire comprising the rubber composition of any one of the above claims.

## Patentansprüche

1. Kautschukzusammensetzung, die Folgendes umfasst:
ein zinnfunktionalisiertes Elastomer;
ein reduziertes Graphenoxid; und
ein Vernetzungssystem.

2. Kautschukzusammensetzung nach Anspruch 1, wobei das zinnfunktionalisierte Elastomer ein Dienelastomer ist, das aus der aus Polybutadienen, synthetischen Polyisoprenen, Naturkautschuk, Copolymeren von Butadien, Styrol-Butadien, Isoprencopolymeren und Mischungen dieser Elastomere bestehenden Gruppe ausgewählt ist.

3. Kautschukzusammensetzung nach Anspruch 2, wobei das zinnfunktionalisierte Elastomer ein Styrol-Butadien-Elastomer ist.

4. Kautschukzusammensetzung nach Anspruch 2, wobei das zinnfunktionalisierte Elastomer ein Polybutadienelastomer ist.

5. Kautschukzusammensetzung nach einem der vorherigen Ansprüche, wobei das reduzierte Graphenoxid einen Sauerstoffgehalt zwischen 0,1 und 20 Mol-% hat.

6. Kautschukzusammensetzung nach Anspruch 5, wobei das reduzierte Graphenoxid einen Sauerstoffgehalt zwischen 0,1 und 1,5 Mol-% hat.

7. Kautschukzusammensetzung nach Anspruch 5, wobei das reduzierte Graphenoxid einen Sauerstoffgehalt zwischen 0,4 und 0,9 Mol-% hat.

8. Kautschukzusammensetzung nach Anspruch 5, wobei das reduzierte Graphenoxid einen Sauerstoffgehalt zwischen 4 und 20 Mol-% hat.

9. Kautschukzusammensetzung nach Anspruch 8, wobei das reduzierte Graphenoxid einen Sauerstoffgehalt zwischen 4 und 9 Mol-% hat.

10. Kautschukzusammensetzung nach Anspruch 8, wobei das reduzierte Graphenoxid einen Sauerstoffgehalt zwischen 4 und 8 Mol-% hat.

11. Kautschukzusammensetzung nach Anspruch 8, wobei das reduzierte Graphenoxid einen Sauerstoffgehalt von 5 bis 5,9 Mol-% hat.

12. Kautschukzusammensetzung nach einem der obigen Ansprüche, wobei das reduzierte Graphenoxid eine spezifische Oberfläche von mehr als 400 m²/g hat, gemessen wie in der Patentschrift beschrieben.

13. Kautschukzusammensetzung nach Anspruch 12, wobei das reduzierte Graphenoxid eine spezifische Oberfläche von gleich oder größer als 600 m²/g hat.

14. Kautschukzusammensetzung nach Anspruch 12, wobei das reduzierte Graphenoxid eine spezifische Oberfläche von gleich oder größer als 800 m²/g hat.

15. Kautschukzusammensetzung nach Anspruch 3, wobei das Molekulargewicht (Mn) des Polymers im Bereich von 140 bis 160 kg/mol liegt.

16. Kautschukzusammensetzung nach Anspruch 3, wobei der Styrol-Butadien-Kautschuk durch Lösungsmittelpolymerisation erhalten wird.

17. Reifen, der die Kautschukzusammensetzung nach einem der obigen Ansprüche umfasst.

## Revendications

1. Composition de caoutchouc comprenant :
un élastomère à fonction étain ;
un oxyde de graphène réduit ; et
un système de réticulation.

2. Composition de caoutchouc selon la revendication 1, dans laquelle l'élastomère à fonction étain est un élastomère diénique sélectionné dans le groupe consistant en polybutadiènes, polyisoprènes synthétiques, caoutchouc naturel, copolymères de butadiène, styrène-butadiène, copolymères d'isoprène, et mélanges de ces élastomères.

3. Composition de caoutchouc selon la revendication 2, dans laquelle l'élastomère à fonction étain est un élastomère styrène-butadiène.

4. Composition de caoutchouc selon la revendication 2, dans laquelle l'élastomère à fonction étain est un élastomère de polybutadiène.

5. Composition de caoutchouc selon l'une quelconque des revendications précédentes, dans laquelle l'oxyde de graphène réduit présente une teneur en oxygène comprise entre 0,1 et 20 % en moles.

6. Composition de caoutchouc selon la revendication 5, dans laquelle l'oxyde de graphène réduit présente une teneur en oxygène comprise entre 0,1 et 1,5 % en moles.

7. Composition de caoutchouc selon la revendication 5, dans laquelle l'oxyde de graphène réduit présente une teneur en oxygène comprise entre 0,4 et 0,9 % en moles.

8. Composition de caoutchouc selon la revendication 5, dans laquelle l'oxyde de graphène réduit présente une teneur en oxygène comprise entre 4 et 20 % en moles.

9. Composition de caoutchouc selon la revendication 8, dans laquelle l'oxyde de graphène réduit présente une teneur en oxygène comprise entre 4 et 9 % en moles.

10. Composition de caoutchouc selon la revendication 8, dans laquelle l'oxyde de graphène réduit présente une teneur en oxygène comprise entre 4 et 8 % en moles.

11. Composition de caoutchouc selon la revendication 8, dans laquelle l'oxyde de graphène réduit présente une teneur en oxygène de 5 à 5,9 % en moles.

12. Composition de caoutchouc selon l'une quelconque des revendications précédentes, dans laquelle l'oxyde de graphène réduit présente une surface spécifique de plus de 400 m²/g, mesurée comme décrit dans la description.

13. Composition de caoutchouc selon la revendication 12, dans laquelle l'oxyde de graphène réduit présente une surface spécifique supérieure ou égale à 600 m²/g.

14. Composition de caoutchouc selon la revendication 12, dans laquelle l'oxyde de graphène réduit présente une surface spécifique supérieure ou égale à 800 m²/g.

15. Composition de caoutchouc selon la revendication 3, dans laquelle le poids moléculaire (Mn) du polymère se situe dans la plage de 140 à 160 kg/mole.

16. Composition de caoutchouc selon la revendication 3, dans laquelle le caoutchouc styrène-butadiène est obtenu par polymérisation par solvant.

17. Pneu comprenant la composition de caoutchouc selon l'une quelconque des revendications précédentes.
